# EUROPÄISCHE PATENTANMELDUNG

(11) **EP 0 687 117 A2**
(43) Veröffentlichungstag der Anmeldung: **13.12.1995**
(21) Anmeldenummer: 95108194.2
(22) Anmeldetag: 29.05.1995
(51) Int. Cl.: H04Q 7/36, H04B 7/26

(54) **Funktelefonsystem**

(30) Priorität: 06.06.1994 DE 4419723
(71) Anmelder: SIEMENS AKTIENGESELLSCHAFT, D-80333 München (DE)
(72) Erfinder: Zimmermann, Thomas, Dr.-Ing., D-67127 Rödersheim (DE)

(57) **Zusammenfassung**

Bei einem Funktelefonsystem, bei dem Signale von und zu Teilnehmer-Funkstationen (M1, M2) in einer Mehrzahl von Funksystemen (F1, F2) übertragbar sind und bei dem jedes Funksystem (F1, F2) eine Mehrzahl von Kanälen (K) aufweist, werden die Kanäle (K) der Funksysteme (F1, F2) derart gewählt, daß sie mindestens teilweise im selben Frequenzbereich liegen. Die Funksysteme (F1, F2) können dabei gleichartig oder unterschiedlich ausgebildet sein. Eines der Funksysteme (F1) kann bei der Vergabe der Kanäle (K) eine Führungsrolle übernehmen, oder es können mehrere Funksysteme gleichberechtigt nebeneinander bestehen. Eine Steuereinheit (ST) koordiniert die Vergabe und/oder Zuteilung der Kanäle (K).

## Beschreibung

Die Erfindung bezieht sich auf ein Funktelefonsystem gemäß dem Oberbegriff des Patentanspruchs 1, sowie auf eine zugehörige Teilnehmer-Funkstation.

Zur drahtlosen Kommunikation zwischen Teilnehmern eines öffentlichen oder privaten Fernsprechnetzes ist es allgemein bekannt, externe und interne Funksysteme zu benutzen. Externe Funksysteme, d.h. Außerhaus-Systeme sind insbesondere Mobilfunksysteme, wie das in der Bundesrepublik Deutschland bekannte C-Netz, bei dem die Sprache analog übertragen wird oder das nach dem GSM-Standard (GSM = Global System for Mobile Communication) aufgebaute D-Netz. Als typische interne Funksysteme, d.h. Inhaus-Systeme, werden beispielsweise schnurlose Telefonsysteme, d.h. schnurlose Telefone oder schnurlose Nebenstellenanlagen angesehen. Sie arbeiten beispielsweise nach den bekannten Standards CT1+, CT2 oder DECT. Charakteristisch für die derzeit eingeführten internen und externen Funksysteme ist, daß jedes Funksystem für sich bestimmte Frequenzbänder ausschließlich benutzt. Dies ist sowohl bei verschiedenen externen als auch bei verschiedenen internen Funksystemen der Fall. Falls ein Teilnehmer sowohl intern als auch extern drahtlos kommunizieren möchte, muß er entweder zwei unterschiedliche Mobilstationen mit sich führen oder ein kombiniertes Gerät, das Sende/Empfangsteile sowohl für ein schnurloses Telefonsystem als auch für ein Mobilfunksystem enthält.

Eine Mobilstation, die eine Kombination aus einem schnurlosen Telefon und einem Mobiltelefon darstellt und Sende/Empfangsteile sowohl für ein schnurloses Telefonsystem als auch für ein Mobilfunksystem enthält, ist beispielsweise aus der US PS 4,989,230 bekannt. Wenn sich ein Teilnehmer im Bereich einer zugeordneten Basis-Telefonstation des schnurlosen Telefons befindet, wird die Kommunikation über diese abgewickelt und sobald sich der Teilnehmer außerhalb dieses Bereiches befindet, wird die Kommunikation über eine Mobilfunk-Basisstation abgewickelt. Ein derartiges Funktelefon erfordert jedoch einen verhältnismäßig großen Aufwand, da es Sende/Empfangsteile und Steuerungsteile für beide Arten der drahtlosen Kommunikation enthält. Es wird damit relativ groß und schwer. Auch aus der DE 40 19 010 A1 ist eine Funkgerätekombination bekannt, die ein schnurloses Telefon mit einem Mobiltelefon kombiniert.

In der deutschen Patentanmeldung P 43 07 966.0 wird ein Mobilfunksystem mit einer Mehrzahl von Mobilstationen und einer Mehrzahl von an ein öffentliches Netz anschließbaren Basisstationen vorgeschlagen, bei dem eine Basisstation mit einem internen Netz verbunden ist. Zu dem internen Netz haben nur Teilnehmer einer geschlossenen Gruppe Zugriff. Diese Teilnehmer sind mit Mobilstationen versehen, die in einer internen Betriebsart eine Kommunikation über die mit dem internen Netz verbundene Basisstation durchführen, und die in einer externen Betriebsart eine Kommunikation über eine direkt mit dem öffentlichen Netz verbundene Basisstation durchführen. Bei diesem vorgeschlagenen System wird ein einziges Mobilfunksystem sowohl für die drahtlose interne als auch für die drahtlose externe Kommunikation mittels gleicher Mobilstationen benutzt.

Bei zukünftigen Funktelefonsystemen, die unter den Bezeichnungen UMTS (Universal Mobile Telecommunication System) und FPLMTS (Future Public Land Mobile Telecommunication System) bekannt sind, werden die internen und die externen Anwendungen durch einen gemeinsamen Standard definiert. Auch für diesen Standard sind für die externen und die internen Anwendungen getrennte Frequenzbänder vorgesehen. Dies hat zur Folge, daß sehr viele Frequenzen zur Verfügung gestellt werden müssen.

Der Erfindung liegt die Aufgabe zugrunde, ein Funktelefonsystem anzugeben, das für eine Mehrzahl von Funksystemen die zur Verfügung stehenden Frequenzen bestmöglich ausnutzt.

Erfindungsgemäß wird die Aufgabe bei dem Funktelefonsystem der eingangs genannten Art durch die im kennzeichnenden Teil des Patentanspruchs 1 angegebenen Merkmale gelöst. Eine zugehörige Teilnehmer-Funkstation ist im Patentanspruch 11 angegeben.

Bei dem Funktelefonsystem gemäß der vorliegenden Erfindung werden die Funksysteme zumindest teilweise im selben Frequenzband betrieben. Die Standards für beide Systeme können dabei gleich oder unterschiedlich sein. Eine Mehrfachbelegung von Kanälen ist beispielsweise aufgrund der räumlichen Trennung dann möglich, wenn ein Funksystem als ein internes Funksystem und ein anderes Funksystem als ein externes Funksystem benutzt wird. Insbesondere die Dämpfung der Funksignale des internen Funksystems durch Wände von Gebäuden ermöglicht die Koexistenz der Mehrzahl der Funksysteme.

Die Erfindung hat den Vorteil, daß die Funkstationen auf einfache Weise hergestellt werden können, da die Sende/Empfangseinrichtungen für die verschiedenen Funksysteme wegen des selben Frequenzbandes ähnlich ausgebildet sein können.

Weiterbildungen der Erfindung ergeben sich aus den Unteransprüchen.

Ausführungsbeispiele der Erfindung werden im folgenden anhand von Zeichnungen näher erläutert. Es zeigen:
- Fig. 1: eine schematische Darstellung eines erfindungsgemäßen Funktelefonsystems bestehend aus einem schnurlosen Telefonsystem und einem Mobilfunksystem,
- Fig. 2: eine schematische Darstellung der momentanen Verteilung von Kanälen gemäß einer ersten Ausführungsform der Erfindung,
- Fig. 3: eine schematische Darstellung der momentanen Verteilung von Kanälen gemäß einer zweiten Ausführungsform der Erfindung, und
- Fig. 4: eine schematische Darstellung der momentanen Verteilung von Kanälen gemäß einer dritten Ausführungsform der Erfindung.

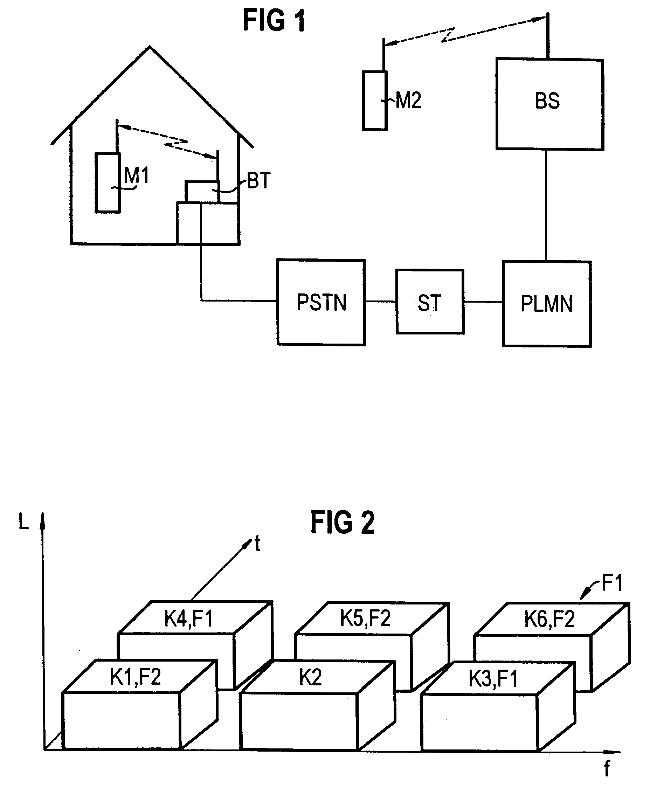

Das in Fig. 1 dargestellte Funktelefonsystem weist zwei unterschiedliche Funksysteme auf. Das erste Funksystem ist beispielsweise als ein Inhaus-System ausgebildet und für eine interne Kommunikation im Bereich eines Gebäudes oder eines Betriebs vorgesehen. Es ist z.B. als ein schnurloses Telefonsystem ausgebildet. Das erste Telefonsystem umfaßt eine an ein öffentliches Netz PSTN (public switched telefone network) angeschlossene Basis-Telefonstation BT und eine erste als Mobilstation M1 ausgebildet Teilnehmer-Funkstation. Die Basis-Telefonstation BT kann auch als Teil einer Nebenstellenanlage ausgebildet sein. Das erste Funksystem ist beispielsweise entsprechend dem bekannten DECT-Standard ausgebildet.

Für eine externe Kommunikation enthält das Funktelefonsystem ein als Mobilfunksystem ausgebildetes zweites Funksystem als Außerhaus-System. Es enthält eine Mehrzahl von Basisstationen und eine Mehrzahl von Mobilstationen, von denen nur die Basisstation BS und die Mobilstation M2 dargestellt sind. Das Mobilfunksystem ist beispielsweise entsprechend dem bekannten GSM-Standard (GSM = Global System for Mobile Communication) ausgebildet. Die Basisstation BS ist mit einem öffentlichen Mobilfunknetz PLMN (public land mobile network) verbunden.

Im Gegensatz zu dem bekannten Funktelefonsystem, bei dem das erste und das zweite Funksystem in unterschiedlichen Frequenzbändern arbeiten, wird gemäß der vorliegenden Erfindung bei beiden Funksystemen mindestens teilweise der selbe Frequenzbereich benutzt. Zur Koordination der verschiedenen Frequenzen ist eine Steuereinheit ST vorgesehen, die gegebenenfalls die einzelnen Kanäle zuteilt.

Für die Aufteilung der Kanäle auf die verschiedenen Funksysteme gibt es mehrere Möglichkeiten. Einerseits kann ein Funksystem die Führung übernehmen (Master-Slave-System), oder es können mehrere Funksysteme gleichberechtigt nebeneinander bestehen (Partner-System). Im Falle des Master-Slave-Systems mit zwei Funksystemen kann entweder das erste oder das zweite Funksystem die Führung übernehmen. Das führende System (Master-System) kann für seine Teilnehmer Kanäle vergeben, ohne auf das geführte System (Slave-System) Rücksicht zu nehmen. Das Slave-System hingegen darf nur die Kanäle belegen, die das Master-System gerade nicht belegt oder das Master-System nicht beeinflussen. Im Falle einer Kollision, wenn beispielsweise ein vom Slave-System belegter Kanal durch das Master-System belegt werden muß, muß das Slave-System nachgeben und den Kanal freigeben. Es ist jedoch möglich, mindestens einen Kanal nur für das Slave-System zu reservieren. Die Koordination der Kanalvergabe erfolgt über die Steuereinheit ST.

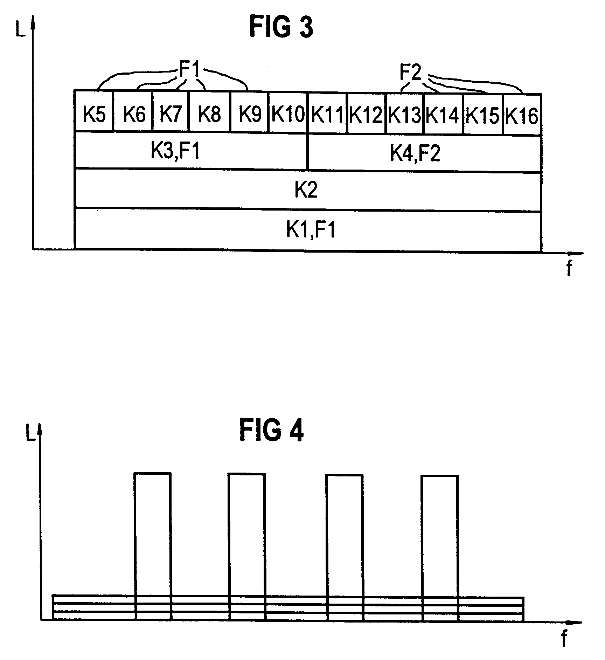

Bei dem in Fig. 2 dargestellten Verteilungssystem wird von einem Master-Slave-System ausgegangen, bei dem von beiden Funksystemen F1 und F2 das gleiche System benutzt wird und bei dem sechs Kanäle zur Verfügung stehen. Beide Funksysteme F1 und F2 sollen beispielsweise nach einem Vielfach-Zugriffsverfahren FDMA/TDMA (Frequency division multiple access/ Time division multiple access) arbeiten, wie es im GSM vorgesehen ist. In den drei Koordinatenrichtungen sind die Frequenz f, die Zeit t und die Leistungsdichte L aufgetragen. Bei der momentanen Verteilung wird angenommen, daß das erste Funksystem F1 (Master-System) gerade die Kanäle K3 und K4 benutzt und das zweite Funksystem F2 (Slave-System) gerade die Kanäle K1, K5 und K6 benutzt. Der Kanal K2 soll gerade frei sein. Für das erste Funksystem F1 sind die Kanäle K1, K2, K5 und K6 belegbar. Das erste Funksystem F1 erzwingt gerade die Freigabe des Kanals K6. Das zweite Funksystem F2 wird das Gespräch vom Kanal K6 auf den Kanal K2 verlegen und damit den Kanal K6 freigeben.

Bei gleichberechtigten Funksystemen (Partner-System) haben beide Funksysteme die Verhaltensregel, nur solche Kanäle zu belegen, die gerade frei sind oder die das andere Funksystem nicht beeinflussen. Bereits belegte Kanäle können nur von dem belegenden System freigegeben werden, es sei denn, das andere Funksystem verhält sich aus einem bestimmten Grund dominant und belegt einen Kanal. In diesem Fall ist ein Nachgeben des belegenden Systems möglich. Beispielsweise kann bei einem Notruf auf einem Funksystem das andere Funksystem auf die Belegung eines bestimmten Kanals verzichten. Auch hier erfolgt die Koordination bei der Kanalvergabe über die Steuereinheit ST.

Bei der in Fig. 3 gezeigten Ausführungsform wird von einem Vielfach-Zugriffsverfahren CDMA (Code division multiple access) für zwei Funksysteme F1 und F2 ausgegangen. In den Koordinatenrichtungen sind die Frequenz f und die Leistungsdichte L dargestellt. Es wird beispielsweise angenommen, daß die Kanäle K1, K3 und K5 bis K9 vom ersten Funksystem F1 und die Kanäle K4 und K13 bis K16 vom zweiten Funksystem F2 belegt sind. Die Kanäle K2 und K10 bis K12 sollen frei sein.

Die in Fig. 3 dargestellte Ausführungsform zeigt eine Besonderheit des CDMA-Funksystems, nämlich Kanäle, die für verschiedene Anwendungsfälle mit unterschiedlichen Bandbreiten versehen sind.

Bei der in Fig. 4 gezeigten Ausführungsform wird von einem Master-Slave-System ausgegangen, bei dem ein Funksystem F1 (Master-System) nach dem CDMA-System arbeitet und das andere Funksystem F2 (Slave-System) nach dem FDMA-, dem TDMA- oder dem FDMA/TDMA-System arbeitet. Das Master-System F1 kann die Kanäle K1 bis K4 belegen, während das Slave-System F2 die Kanäle K5 bis K7 belegen kann. Wenn die Interferenz auf den Kanälen K1 bis K4 aufgrund der CDMA-Kanäle K5 bis K7 zu groß wird, so muß das Slave-System F2 Kanäle freigeben. Umgekehrt gilt dies nicht, d.h. wenn die Interferenz auf den Kanälen K5 bis K7 zu groß wird und das Slave-System F2 zur Freigabe eigener Kanäle nicht in der Lage ist, die Interferenz unter eine vorgegeben Schwelle zu bringen, so muß das Slave-System F2 warten, bis das Master-Slave-System F1 wieder genügend viele Kanäle freigegeben hat.

Die Vergabe und die Belegung der Kanäle wird durch die Steuereinheit ST gesteuert. Dies kann einerseits durch eine Signalisierung zwischen den Funksystemen F erfolgen. Andererseits ist auch eine Kanalbelegung aufgrund von Interferenzmessungen möglich. Zu diesem Zweck werden die Teilnehmer-Funkstationen mit Meßeinrichtungen für die Interferenz versehen und die Meßwerte werden an die Steuereinheit ST abgegeben.

## Patentansprüche

1. Funktelefonsystem, bei dem Signale von und zu Teilnehmer-Funkstationen (M1, M2) über eine Mehrzahl von Funksystemen (F1, F2) übertragbar sind und bei dem jedes Funksystem (F1, F2) eine Mehrzahl von Kanälen (K) aufweist,
**dadurch gekennzeichnet,**
daß die Kanäle (K) der Funksysteme (F1, F2) mindestens teilweise im selben Frequenzbereich liegen.

2. Funktelefonsystem nach Anspruch 1,
**dadurch gekennzeichnet,**
daß als Funksysteme (F1, F2) nach gleichen Standards arbeitende Funksysteme vorgesehen sind.

3. Funktelefonsystem nach Anspruch 2,
**dadurch gekennzeichnet,**
daß die Funksysteme (F1, F2) als nach einem FDMA/TDMA-Standard arbeitende Funksysteme ausgebildet sind.

4. Funktelefonsystem nach Anspruch 2,
**dadurch gekennzeichnet,**
daß die Funksysteme (F1, F2) als nach einem CDMA-Standard arbeitende Funksysteme ausgebildet sind.

5. Funktelefonsystem nach Anspruch 1,
**dadurch gekennzeichnet,**
daß als Funksysteme (F1, F2) nach unterschiedlichen Standards arbeitende Funksysteme vorgesehen sind.

6. Funktelefonsystem nach Anspruch 5,
**dadurch gekennzeichnet,**
daß die Funksysteme (F1, F2) als nach einem FDMA/TDMA-und nach einem CDMA-Standard arbeitende Funksysteme ausgebildet sind.

7. Funktelefonsystem nach einem der Ansprüche 1 bis 6,
**dadurch gekennzeichnet,**
daß die Funksysteme (F1, F2) als ein internes und ein externes Funksystem ausgebildet sind.

8. Funktelefonsystem nach einem der vorangehenden Ansprüche,
**dadurch gekennzeichnet,**
daß eine Steuereinheit (ST) vorgesehen ist, die eine Vergabe der Kanäle (K) für die Funksysteme (F1, F2) koordiniert.

9. Funktelefonsystem nach einem der vorangehenden Ansprüche,
**dadurch gekennzeichnet,**
daß eines der Funksysteme (F1) für die Vergabe der Kanäle (K) als ein führendes System (Master-Sytem) ausgebildet ist und daß mindestens ein anderes Funksystem (F2) als ein geführtes System (Slave-System) ausgebildet ist.

10. Funktelefonsystem nach einem der Ansprüche 1 bis 8,
**dadurch gekennzeichnet,**
daß die Funksysteme (F1, F2) für die Vergabe der Kanäle (K) als gleichberechtigte Systeme ausgebildet sind.

11. Funktelefonsystem nach einem der vorangehenden Ansprüche,
**dadurch gekennzeichnet,**
daß ein Funksystem (F1) als ein schnurloses Telefonsystem und ein Funksystem (F2) als ein Mobilfunksystem ausgebildet ist.

12. Teilnehmer-Funkstation für ein Funktelefonsystem, bei dem Signale über eine Mehrzahl von Funksystemen (F1, F2) übertragbar sind und bei dem jedes Funksystem (F1, F2) eine Mehrzahl von Kanälen (K) aufweist,
**dadurch gekennzeichnet,**
daß die Teilnehmer-Funkstation (M1, M2) für eine Übertragung von Signalen der Funksystemen (F1, F2) auf den selben Freqenzen ausgebildet ist.

13. Teilnehmer-Funkstation nach Anspruch 12,
**dadurch gekennzeichnet,**
daß die Funkstation (M1, M2) eine Meßeinrichtung für die Interferenz der Kanäle (K) der Funksysteme (F1, F2) aufweist.

14. Teilnehmer-Funkstation nach Anspruch 11 oder Anspruch 12,
**dadurch gekennzeichnet,**
daß sie als eine Mobilstation (M1, M2)ausgebildet ist.
